# EUROPEAN PATENT SPECIFICATION

(11) **EP 1 474 577 B1**
(45) Date of publication and mention of the grant of the patent: **23.09.2009**
(21) Application number: 03731876.3
(22) Date of filing: 22.01.2003
(51) Int. Cl.: E04F 15/02, E04F 15/04

(54) **A PROCESS FOR SEALING OF A JOINT WITH A GLUE THAT IS ACTIVATED BY A FLUID**
VERFAHREN ZUM ABDICHTEN EINER VERBINDUNG MIT EINEM DURCH EIN FLUID AKTIVIERBAREN KLEBSTOFF
PROCEDE PERMETTANT DE SCELLER UN JOINT AU MOYEN D'UNE COLLE ACTIVEE PAR UN FLUIDE

(30) Priority: 25.01.2002 SE 0200210
(43) Date of publication of application: 10.11.2004
(73) Proprietor: Pergo (Europe) AB, 231 25 Trelleborg (SE)
(72) Inventor: PALMBLAD, Ulf, S-222 22 Lund (SE); SJÖBERG, Ake, S-227 31 Lund (SE)
(74) Representative: HOFFMANN EITLE
(86) International application number: PCT/SE2003/000116
(87) International publication number: WO 2003/062555

(56) References cited:
- EP-A1- 1 020 504
- WO-A1-01/94721
- DE-A1- 3 307 502
- DE-A1- 19 547 864
- GB-A- 2 278 360
- US-A- 5 618 602
- US-A- 6 029 416

## Description

The present invention relates to sealing of a joint comprising glued edges.

Prefabricated surface elements which at their edges are provided with groove and tenon are well known nowadays. As these are very easy to install, it is possible for the normal handy man to achieve this. Such elements can be constituted of massive wood, fibre board or particle board. These are often provided with a surface layer, such as lacquer or some sort of laminate. The boards are most often installed by gluing them together via their groove and tenon. It is desired to join the separate elements so closely that the joint becomes practically invisible, which increases the moisture resistance radically. The usable life of the installed elements are hereby also increased. It is essential that glue is used excessively in order to achieve a tight joint. Any gaps will lead to that moisture may penetrate the joint with subsequent swelling of the core material closest to the joint. The glue do also have to be used to an amount that it is spill out trough the joint on the decorative side of the surface elements. The superfluous glue will of course have to be wiped off before beginning to set, which is rather time consuming.

One way of solving the problem is available on the market for some time now through different types of so-called click or snap-lock floor boards where no glue is to be used. The installation of such floor boards has become much swifter as no glue is required. The problems with these type of surface elements are that relatively small spills of fluids like water may cause great damage on the installed surface elements as well as sub walls and especially subfloors as the fluid will run through the joints rather rapidly due to the capillary effect. It is, of course, possible to use glue on these snap-lock type of elements as well although the problem with the time consuming cleaning during installation would remain.

It has, through the present invention, been made possible to solve the above mentioned problems so that self sealing surface elements can be achieved. The glue system can be used on any type of joint but have its greatest advantage on panels provided with tongue and grove along its edges. The glue system may also be used on joint with mechanical locking. Accordingly the invention relates to a process for installation of surface elements. The surface elements comprising a core, a decorative upper surface and edges provided with joining means for mechanically locking the surface elements together. The invention is **characterised in that** predetermined portions of the edges are provided with a glue which is present on the edges of the surface elements in a passive dry form and which may be activated by applying a liquid. The glue is provided with an indicator means which indicator means indicates the difference between a passive glue and an activated glue. The surface elements are hereby joined to each other by use of the joining means wherein a unit of a plurality of surface element is formed. The glue is suitably a PVA glue. The glue is suitably applied on the edges as an emulsion which then is allowed to dry before the joining of the surface elements. The liquid used for reactivating the glue is suitably water. The water is advantageously mixed with alcohol since this reduces the surface tension of the liquid as well as the evaporation rate increases. A thin coat of the liquid is suitably applied on the installed surface elements wherein small amounts of the liquid will penetrate into the joints thereby moisturising and activating the glue. The glue will hereby expand and merge over the edges of the joint and will act as sealant against further penetration of liquid. It is not necessary to actively activate the glue by applying the liquid over the installed surface elements as small amounts of liquid accidentally spilt on the installed surface elements will penetrate into the joints thereby moisturising and activating the glue so that the glue expands and merges over the edges of the joint thereby acting as a sealant against further penetration of liquid.

The indicator means is used for assuring that the glue is properly activated during the installation procedure.

According to one embodiment of the invention the indicator means indicates the presence of the activating liquid by a change in colour. This may be achieved by adding a crystalline pigment to the glue. The pigment should be of the type which changes colour when bonding crystal water and it is advantageous if the crystal water is released rather easily.

According to another embodiment of the invention the indicator means is a fluorescent substance, preferably a so-called UV probe. One such UV probe that has showed to be suitable is Pyranin® which change emission spectrum in UV light between wet and dry condition.

According to yet another embodiment of the invention the indicator means is a chemiluminescent substance such as peroxide decomposion, peroxyoxalate, ion radical and electron transfer chemiluminescence.

According to yet another embodiment of the invention the indicator means indicates the presence of the activating liquid by releasing a scent.

According to yet another embodiment of the invention the indicator means indicates the presence of the activating liquid by a change in opacity. This change in opacity may be visually enhanced by applying a pigmentation of at least portions of the edge beneath the glue. It is advantageous to choose a darker colour for the pigmentation or dyeing of the edge as the contrast will increase.

According to yet another embodiment of the invention the indicator means indicates the presence of the activating liquid by causing the glue to swell. This is most advantageously achieved by adding an expanding agent to the glue. One suitable expanding agent is selected from the group of cellulose derivatives.

## Claims

1. A process for installation of surface elements, the surface elements comprising a core, a decorative upper surface and edges provided with joining means for mechanically locking the surface elements together wherein predetermined portions of the edges are provided with a glue which is present on the edges of the surface elements in a passive dry form and which may be activated by applying a liquid, the glue being provided with an indicator means which indicator means indicates the difference between a passive glue and an activated glue whereby the surface elements are joined to each other by use of the joining means wherein a unit of a plurality of surface elements is formed.

2. A process according to claim 1 wherein the glue is a PVA glue.

3. A process according to claim 2 wherein the glue is applied on the edges as an emulsion which then is allowed to dry before the joining of the surface elements.

4. A process according to claim 1 wherein the liquid is water.

5. A process according to claim 1 wherein the liquid is a mixture of water and alcohol.

6. A process according to any of the claims 1 - 5 wherein a thin coat of the liquid is applied on the upper surface of the installed surface elements wherein small amounts of the liquid will penetrate into the joints thereby moisturising and activating the glue whereas the glue will expand and merge over the edges of the joint and will act as sealant against further penetration of liquid.

7. A process according to any of the claims 1 - 5 wherein small amounts of liquid accidentally spilt on the upper surface of the installed surface elements will penetrate into the joints thereby moisturising and activating the glue whereas the glue will expand and merge over the edges of the joint and will act as sealant against further penetration of liquid.

8. A process according to any of the claims 1 - 5 wherein the indicator means indicates the presence of the activating liquid by a change in colour.

9. A process according to claim 8 wherein the indicator means is a crystalline pigment.

10. A process according to any of the claims 1 - 5 wherein the indicator means is a fluorescent substance.

11. A process according to claim 10 wherein the indicator means is a so-called UV probe.

12. A process according to any of the claims 1- 5 wherein the indicator means is a chemiluminescent substance.

13. A process according to any of the claims 1 - 5 wherein the indicator means indicates the presence of the activating liquid by releasing a scent.

14. A process according to any of the claims 1 - 5 wherein the indicator means indicates the presence of the activating liquid by a change in opacity.

15. A process according to claim 14 wherein at least portions of the edge beneath the glue is provided with pigmentation.

16. A process according to any of the claims 1 - 5 wherein the indicator means indicates the presence of the activating liquid by causing the glue to swell.

17. A process according to claim 16 wherein the indicator means is an expanding agent.

18. A process according to claim 17 wherein the expanding agent is a cellulose derivative.

## Patentansprüche

1. Verfahren zur Montage von Flächenelementen, die einen Kern, eine dekorative obere Oberfläche und Kanten, die mit Verbindungsmitteln zur mechanischen Arretierung der Flächenelemente miteinander ausgestattet sind, umfassen, worin vorgegebene Teile der Kanten mit einem Klebstoff ausgestattet sind, der an den Kanten der Flächenelemente in einer passiven, trockenen Form vorliegt und der durch Anwendung einer Flüssigkeit aktiviert werden kann, und der Klebstoff mit einem Indikatormittel ausgestattet ist, der den Unterschied zwischen einem passiven Klebstoff und einem aktivierten Klebstoff anzeigt, wobei die Flächenelemente durch Verwendung der Verbindungsmittel miteinander verbunden werden, und dabei eine Einheit einer Vielzahl von Flächenelementen gebildet wird.

2. Verfahren gemäß Anspruch 1, wobei der Klebstoff ein PVA-Klebstoff ist.

3. Verfahren gemäß Anspruch 2, wobei der Klebstoff auf den Kanten als Emulsion aufgebracht und dann getrocknet wird, bevor die Flächenelemente zusammengefügt werden.

4. Verfahren gemäß Anspruch 1, wobei die Flüssigkeit Wasser ist.

5. Verfahren gemäß Anspruch 1, wobei die Flüssigkeit eine Mischung aus Wasser und Alkohol ist.

6. Verfahren gemäß mindestens einem der Ansprüche 1 bis 5, wobei eine dünne Schicht der Flüssigkeit auf die Oberfläche der montierten Flächenelemente aufgebracht wird, wobei geringe Mengen der Flüssigkeit in die Verbindungsstellen eindringen und dabei den Klebstoff befeuchten und aktivieren, wobei der Klebstoff sich über die Kanten der Verbindungsstellen ausdehnt und verschmolzen wird und als Abdichtmittel gegen weiteres Eindringen der Flüssigkeit wirkt.

7. Verfahren gemäß mindestens einem der Ansprüche 1 bis 5, wobei geringe Mengen zufällig auf der oberen Oberfläche der montierten Oberflächenelemente vergossene Flüssigkeit in die Verbindungsstellen eindringt und dabei den Klebstoff befeuchtet und aktiviert, wobei sich der Klebstoff über die Kanten der Verbindungsstellen ausdehnt und verschmolzen wird und als Abdichtmittel gegen weiteres Eindringen der Flüssigkeit agieren wirkt.

8. Verfahren gemäß mindestens einem der Ansprüche 1 bis 5, wobei das Indikatormittel das Vorliegen der aktivierten Flüssigkeit durch einen Farbwechsel anzeigt.

9. Verfahren gemäß Anspruch 8, wobei das Indikatormittel ein kristallines Pigment ist.

10. Verfahren gemäß mindestens einem der Ansprüche 1 bis 5, wobei das Indikatormittel eine fluoreszierende Substanz ist.

11. Verfahren gemäß Anspruch 10, wobei das Indikatormittel eine sogenannte UV-Sonde ist.

12. Verfahren gemäß mindestens einem der Ansprüche 1 bis 5, wobei das Indikatormittel eine chemolumineszierende Substanz ist.

13. Verfahren gemäß mindestens einem der Ansprüche 1 bis 5, wobei das Indikatormittel das Vorliegen der aktivierten Flüssigkeit durch Abgabe eines Duftstoffes anzeigt.

14. Verfahren gemäß mindestens einem der Ansprüche 1 bis 5, wobei das Indikatormittel das Vorliegen der aktivierten Flüssigkeit durch einen Wechsel in der Lichtdurchlässigkeit anzeigt.

15. Verfahren gemäß Anspruch 14, wobei mindestens Teile der Kante unterhalb des Klebstoffs mit einer Pigmentierung ausgestattet sind.

16. Verfahren gemäß mindestens einem der Ansprüche 1 bis 5, wobei das Indikatormittel das Vorliegen der aktivierten Flüssigkeit durch Verursachen eines Schwellens des Klebstoffs anzeigt.

17. Verfahren gemäß Anspruch 16, wobei das Indikatormittel ein Treibmittel ist.

18. Verfahren gemäß Anspruch 17, wobei das Treibmittel ein Cellulosederivat ist.

## Revendications

1. Procédé pour l'installation d'éléments de surface, les éléments de surface comprenant un noyau, une surface supérieure décorative et des bords prévus avec des moyens de jonction pour bloquer mécaniquement les éléments de surface ensemble, dans lequel des parties prédéterminées des bords sont prévues avec une colle qui est présente sur les bords des éléments de surface sous une forme sèche passive et qui peut être activée par application d'un liquide, la colle étant prévue avec un moyen indicateur, lequel moyen indicateur indique la différence entre une colle passive et une colle activée, d'où il résulte que les éléments de surface sont joints les uns aux autres par l'utilisation des moyens de jonction, dans lequel une unité d'une pluralité d'éléments de surface est formée.

2. Procédé selon la revendication 1 dans lequel la colle est une colle PVA.

3. Procédé selon la revendication 2 dans lequel la colle est appliquée sur les bords sous la forme d'une émulsion qui est ensuite laissée sécher avant la jonction des éléments de surface.

4. Procédé selon la revendication 1 dans lequel le liquide est de l'eau.

5. Procédé selon la revendication 1 dans lequel le liquide est un mélange d'eau et d'alcool.

6. Procédé selon l'une quelconque des revendications 1 à 5 dans lequel une couche mince du liquide est appliquée sur la surface supérieure des éléments de surface installés, dans lequel des petites quantités du liquide pénètrent à l'intérieur des jonctions, humidifiant et activant ainsi la colle, tandis que la colle se dilate et fusionne sur les bords de la jonction et agit comme un produit d'étanchéité contre toute autre pénétration de liquide.

7. Procédé selon l'une quelconque des revendications 1 à 5 dans lequel des petites quantités de liquide accidentellement renversées sur la surface supérieure des éléments de surface installés pénètrent à l'intérieur des jonctions, humidifiant et activant ainsi la colle, tandis que la colle se dilate et fusionne sur les bords de la jonction et agit comme un produit d'étanchéité contre toute autre pénétration de liquide.

8. Procédé selon l'une quelconque des revendications 1 à 5 dans lequel le moyen indicateur indique la présence du liquide d'activation par un changement de couleur.

9. Procédé selon la revendication 8 dans lequel le moyen indicateur est un pigment cristallin.

10. Procédé selon l'une quelconque des revendications 1 à 5 dans lequel le moyen indicateur est une substance fluorescente.

11. Procédé selon la revendication 10 dans lequel le moyen indicateur est une sonde dite UV.

12. Procédé selon l'une quelconque des revendications 1 à 5 dans lequel le moyen indicateur est une substance chimioluminescente.

13. Procédé selon l'une quelconque des revendications 1 à 5 dans lequel le moyen indicateur indique la présence du liquide d'activation par libération d'une odeur.

14. Procédé selon l'une quelconque des revendications 1 à 5 dans lequel le moyen indicateur indique la présence du liquide d'activation par un changement d'opacité.

15. Procédé selon la revendication 14 dans lequel au moins des parties du bord en-dessous de la colle sont prévues avec une pigmentation.

16. Procédé selon l'une quelconque des revendications 1 à 5 dans lequel le moyen indicateur indique la présence du liquide d'activation par gonflement de la colle.

17. Procédé selon la revendication 16 dans lequel le moyen indicateur est un agent de dilatation.

18. Procédé selon la revendication 17 dans lequel l'agent de dilatation est un dérivé de cellulose.
